# EUROPÄISCHE PATENTSCHRIFT

(11) **EP 0 350 608 B1**
(45) Veröffentlichungstag und Bekanntmachung des Hinweises auf die Patenterteilung: **29.09.1993**
(21) Anmeldenummer: 89109631.5
(22) Anmeldetag: 29.05.1989
(51) Int. Cl.: G01M 13/02, G01M 17/04

(54) **Verfahren und Vorrichtung zum Prüfen von Nutzfahrzeugachsen mit Federn**
Procedure and device for testing lorry axles with springs
Procédé et dispositif d'essai d'axes de véhicules utilitaires avec des ressorts

(30) Priorität: 13.07.1988 DE 3823764
(43) Veröffentlichungstag der Anmeldung: 17.01.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: Klock, Jürgen, Dipl.-Ing., D-6111 Otzberg 1 (DE); Fischer, Gerhard, Dr.-Ing., D-6100 Darmstadt (DE); Grubisic, Vatroslav,Dr.-Ing., D-6107 Reinheim 4 (DE)

(56) Entgegenhaltungen:
- GB-A- 2 053 819
- US-A- 4 672 844

## Beschreibung

Die Erfindung betrifft ein Verfahren und einen Prüfstand für das Prüfen eines Achsenaufbaus eines Nutzfahrzeugs, der wenigstens eine Nutzfahrzeugachse und Nutzfahrzeugfedern umfaßt, nach den ersten Teilen der Ansprüche 1,14. Derartiges ist aus dem Aufsatz von F.Klinger/R.Ross "Mehraxiale servohydraulische Prüfstände für Schwingfestigkeits-Untersuchungen an Kraftfahrzeug-Achsen" bekannt, ATZ Automobiltechnische Zeitschrift 74 (1972) 4, Seiten 139 bis 145, insbesondere Bild 17 auf Seite 145.

Die Federung von Nutzfahrzeugen hat die Aufgabe, Bodenunebenheiten auszugleichen und die von der Fahrbahn ausgehenden Kräfte abzufedern. Darüber hinaus wird mit Blattfedern die Achse geführt. Damit werden sämtliche vom Rad in die Achse eingeleiteten Kräfte über die Federn in den Rahmen eingeleitet. Daher ist ein zuverlässiger Festigkeitsnachweis, der alle Belastungsarten berücksichtigt, unter simulierten Betriebsbelastungen auf Versuchsständen von größter Bedeutung.

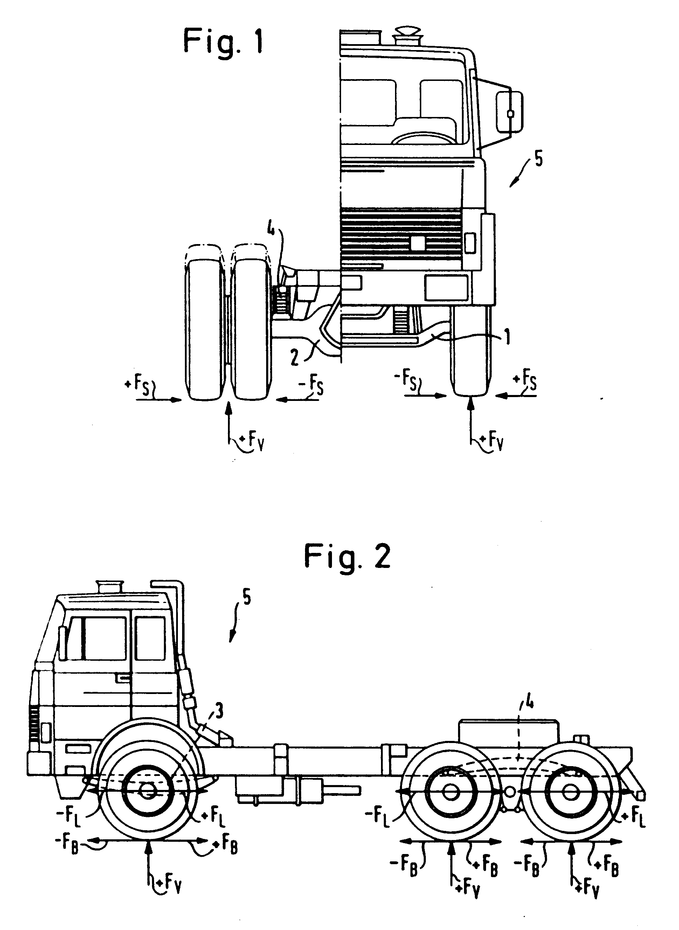

Es sei zunächst unter Bezugnahme auf die Figuren 1 und 2 näher auf die Belastung eingegangen, denen die Nutzfahrzeugfedern ausgesetzt sind:
Die Belastungen der Nutzfahrzeugfedern erfolgen durch folgende Kräfte, die aus Fahrbahnunebenheiten und Fahrmanövern resultieren:
- Vertikalkräfte: F_{V}
- Seitenkräfte: ± F_{S}
- Längskräfte: ± F_{L}
- Brems- und Antriebskräfte: ± F_{B}

Diese an der Vorderachse 1 und der Hinterachse 2 auf die Vorderachsfeder 3 bzw. die Hinterachsfeder 4 des Nutzfahrzeugs 5 einwirkenden Kräfte sind in den Figuren 1 und 2 eingezeichnet und haben folgende Ursachen und Bedeutungen:
(a) Vertikalkräfte F_{V}: Die Vertikalkräfte F_{V} resultieren aus der statischen Vorlast durch das Eigengewicht, aus quasistatischen Gewichtsverlagerungen bei Kurvenfahrt mit gegenläufiger Ein- und Ausfederung der beiden Nutzfahrzeugfedern, aus quasistatischen Gewichtsverlagerungen mit symmetrischer Einfederung beim Bremsen, aus beidseitig, gleichzeitig auftretenden dynamischen Kräften beim Überfahren von Bodenwellen, Querrinnen, Schienenübergängen oder dergleichen, und aus zufallsartigen Belastungen beim Überfahren von Bodenunebenheiten. Letztere stellen höherfrequente Belastungen dar, die auf beiden Seiten des Nutzfahrzeugs unabhängig voneinander auftreten.
(b) Seitenkräfte ± F_{S}: Quasistatische Seitenkräfte wirken bei Kurvenfahrt, und zwar wirken an kurvenäußeren Rädern positive Seitenkräfte + F_{S} zur Fahrzeugmitte hin, und an kurveninneren Rädern wirken negative Seitenkräfte - F_{S} zur Fahrzeugaußenseite hin. Hochfrequente dynamische Seitenkräfte treten beim Überfahren von Bodenunebenheiten und Schlaglöchern auf, wobei die Wirkungsrichtung an jedem Rad wechselweise in beiden Richtungen verlaufen kann, so daß es sich um positive und negative Seitenkräfte ± F_{S} handelt.
(c) Längskräfte ± F_{L}: Hochfrequente Längskräfte ± F_{L} wirken in Achsschenkelmitte sowohl nach hinten als positive Längskräfte + F_{L} als auch nach vorne als negative Längskräfte - F_{L}. Sie stellen die Horizontalkomponente eines beliebigen, schräg in das drehende Rad eingeleiteten Stoßes dar, der beim Überfahren von Bodenunebenheiten auftritt.
(d) Brems- und Antriebskräfte ± F_{B}: Bremskräfte + F_{B} und Antriebskräfte - F_{B} wirken am Radaufstandspunkt infolge der entsprechenden Fahrmanöver.

Darüber hinaus können die Vertikalkräfte, die Seitenkräfte und die Längskräfte sowie die Antriebs- und Bremskräfte auch als Reaktion aus asymmetrischer Rahmenverformung, unsymmetrischer Einfederung und Kurvenfahrten auftreten.

Aus dem Zusammenwirken der vorstehend angegebenen Kräfte ergeben sich die nachfolgenden globalen Verformungen der Nutzfahrzeugfedern:
(1) symmetrische und asymmetrische Einfederung durch Vertikalkräfte F_{V} am Rad
(2) Verdrehung um die Längsachse durch asymmetrische Einfederung (Moment um die Längsachse)
(3) Seitenverschiebung durch Seitenkräfte ± F_{S} und gegebenenfalls Verdrehung
(4) S-Schlag durch Brems- und Antriebskräfte, ± F_{B}
(5) Längsbeanspruchung durch Längskräfte ± F_{L} in Verbindung mit Einfederung oder S-Schlag
(6) Verdrehung um die Vertikalachse durch unterschiedliche Brems- oder Längskräfte.

Zur Erläuterung des bisherigen Standes der Versuchstechnik des Prüfens von Nutzfahrzeugfedern und der Schwierigkeiten, die diese bisherige Versuchstechnik beinhaltet, wird nachfolgend auf die Figuren 1 bis 4 und die nachfolgend genannten Druckschriften Bezug genommen, die einige Versuchsstände für derartige Prüfungen zeigen, sowie schematisch den Unterschied zwischen der bisherigen Versuchstechnik und den tatsächlichen Verhältnissen bei der praktischen Belastung von Nutzfahrzeugfedern veranschaulichen:
(1) Betriebslastensimulation an Fahrzeugbauteilen mittels servohydraulischer Prüfeinrichtungen, G. Jacoby, SCHENCK in: VDI-Berichte Nr. 632, 1987, Bild 18
(2) Simulation von Betriebsbeanspruchungen für den Lebensdauernachweis von Leichtbaublattfedern, H. Oppermann und D. Schütz, FhG-Berichte 2/3, 1987, S. 23-29
(3) Prüfung im Automobilbau, G. Jacoby, aus Vortrag: Prüfung von Werkstoffen und Maschinenbauteilen mittels programmierbarer elektrohydraulischer Prüfmaschinen, Prag, 28.-30.11.1984, CARL SCHENCK AG.

Es sei zunächst auf einen Versuchsstand Bezug genommen, welcher die bisher am meisten verbreitete Versuchstechnik verwirklicht. In diesem Versuchsstand ist eine Blattfeder eines Nutzfahrzeugs an ihren beiden Längsenden, an denen sie, wenn sie im Nutzfahrzeug eingebaut ist, mit dem Fahrzeugaufbau verbunden ist, ortsfest am Versuchsstand angebracht, während an der Anbringungsstelle, an der beim Nutzfahrzeug die Fahrzeugachse angebracht ist, ein Vertikalkrafterzeuger als einziger Krafterzeuger des Versuchsstandes angreift. Diese bisher am meisten verbreitete Versuchstechnik berücksichtigt infolgedessen lediglich die Simulation der senkrechten Einfederung. Damit läßt sich aber kein zuverlässiger Lebensdauernachweis der Nutzfahrzeugfeder erhalten, da die meisten zusätzlichen Belastungsfälle der Praxis unberücksichtigt bleiben.

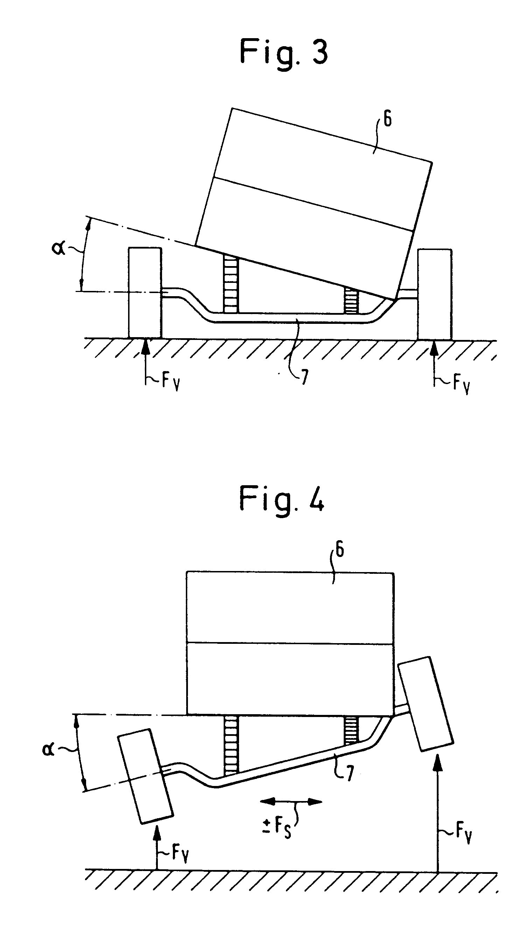

Der in Druckschrift 1, Bild 18 gezeigte Versuchsstand zur gleichzeitigen Untersuchung von zwei Blattfedern, die an den Anbringungsstellen, welche ihrer Verbindung mit der Fahrzeugachse entsprechen, miteinander starr verbunden sind, weist zwei Vertikalkrafterzeuger, einen Seitenkrafterzeuger und einen Bremskrafterzeuger auf. Mit einem derartigen Versuchsstand lassen sich daher zwar außer Vertikalkräften auch Seitenkräfte und Bremskräfte simulieren, jedoch ist dieser Versuchsstand zur Simulation der komplexen Beanspruchungen, denen die Blattfedern unter den Belastungsbedingungen der Fahrpraxis ausgesetzt sind, aus folgenden Gründen weniger geeignet:
(a) Da die Blattfedern im Versuchsstand an ihren Längsenden ortsfest angebracht sind, ergibt sich eine Verfälschung der Krafteinwirkung gegenüber den Bedingungen der Fahrpraxis. Diese Verfälschung sei anhand der Figuren 3 und 4 erläutert, von denen in Fig. 3 schematisch die Verhältnisse der Fahrpraxis angedeutet sind, während Fig. 4 die Verhältnisse zeigt, die dem Versuchsstand der Druckschrift 1, Bild 18 entsprechen. Da die Längsenden der Blattfedern in der Praxis am Fahrzeugaufbau 6 befestigt sind, während die Längsmitten der Blattfedern an der Fahrzeugachse 7 befestigt sind, entspricht die Prüfung der Blattfedern in dem Versuchsstand der Druckschrift 1, Bild 18 einer Umkehrung der praktischen Verhältnisse, bei welcher der Aufbau 6 stets parallel zur Horizontalen, die der Fahrbahn entspricht, bleibt, wie in Fig. 4 dargestellt. Im praktischen Fahrbetrieb jedoch, zum Beispiel bei Kurvenfahrt, ist es, wie Fig. 3 zeigt, gerade so, daß sich der Aufbau 6 mit dem Fahrzeugrahmen gegenüber der Horizontalen bzw. Fahrbahn neigt, wobei die Fahrzeugachse 7, abgesehen von einer Neigung durch Reifeneinfederung, nahezu parallel zur Fahrbahn bleibt.
   Da bei dem Versuchsstand der Druckschrift 1, Bild 18 die Krafterzeuger an der Achsen-Ersatzkonstruktion angreifen, ergeben sich beträchtliche Verfälschungen. Denn durch diese Art der Lasteinleitung und Schrägstellung der Achsen-Ersatzkonstruktion, die einer Schrägstellung der gesamten Achse 7 in Fig. 4 zur Fahrbahn entspricht, werden die Wirkungsrichtungen der Vertikalkräfte F_{V}, der Seitenkräfte ± F_{S} und der Bremskräfte ± F_{B} derart verfälscht, daß es zu großen Ungenauigkeiten und Koppelfehler kommen kann. Denn im Gegensatz zu einer nahezu zur Fahrbahn parallel bleibenden Achse, die dem praktischen Fahrbetrieb entspricht und bei der die Einleitung der Vertikalkräfte im rechten Winkel zur Fahrzeugachse und die Einleitung der Seitenkräfte parallel zur Fahrzeugachse erfolgt (siehe Fig. 3) entspricht der Versuchsstand der Druckschrift 1, Bild 18 dem Fall, in dem - entgegen den Verhältnissen der Fahrpraxis - die Vertikalkräfte nichtsenkrecht und die Seitenkräfte nichtparallel zur Fahrzeugachse eingeleitet werden, wie Fig. 4 veranschaulicht.
(b) Durch das Angreifen aller Krafterzeuger in dem Versuchsstand der Druckschrift 1, Bild 18 an der Achsen-Ersatzkonstruktion können die Vertikalkräfte, die Seitenkräfte und die Bremskräfte nicht unabhängig voneinander eingeleitet werden, und es findet infolgedessen eine gegenseitige Beeinflussung statt, und zwar insbesondere bei der vorstehend unter Bezugnahme auf Fig. 4 diskutierten Schrägstellung.
(c) Da jeweils nur ein Seitenkrafterzeuger und ein Bremskrafterzeuger im Versuchsstand der Druckschrift 1, Bild 18 vorhanden ist, können nicht die in der Fahrpraxis unabhängig voneinander an beiden Seiten der Fahrzeugachse wirkenden Seitenkräfte und Bremskräfte simuliert werden.
(d) Es ergeben sich hohe Einfederungswege durch die Vertikalkräfte, wodurch keine hohen Versuchsfrequenzen erzielt werden können, wie es der Praxis entspricht.

Schließlich sei noch der Versuchsstand nach Druckschrift 2 erwähnt, der zum Festigkeitsnachweis von Einzelblattfedern dient und nicht zum Festigkeitsnachweis der Gesamtbaugruppe Rad, Achse, Federn geeignet ist.

Bei Versuchseinrichtungen zur Prüfung von Fahrzeugachsen unter mehraxialer Krafteinleitung wird die Achse entweder am kompletten Fahrzeug oder in einem Prüfrahmen eingespannt. Prinzipien hierzu sind in Druckschrift 1, Bild 23 bis 26, für PKW und in Druckschrift 3, Bild 63 bis 67, für LKW dargestellt.

Allen diesen Versuchseinrichtungen ist gemeinsam, daß die Radkräfte gegen die gefesselte oder nicht gefesselte LKW-Masse arbeiten, die im Gegensatz zum praktischen Fahrbetrieb weitgehend in seiner Position verharrt, wogegen die Fahrbahn geneigt werden muß. Die Krafterzeuger müssen hier wie bei dem in Druckschrift 2 dargestellten Federprüfstand den gesamten Federweg simulieren, wodurch sowohl die zu erzielende Prüffrequenz als auch die Simulationsgüte bei der Untersuchung der kompletten Achsen beeinträchtigt wird. Die sich dabei gegenseitig beeinflussenden Kraftkomponenten müssen deswegen durch eine aufwendige elektronische Geometriekorrektur kompensiert werden.

Aufgabe der vorliegenden Erfindung ist es ein derartiges Verfahren und einen entsprechenden Prüfstand zur Verfügung zu stellen, welche betriebsähnliche Belastungsbedingungen ermöglichen.

Die Lösung dieser Aufgabe ist den Ansprüchen 1,14 zu entnehmen.

Auf diese Weise wird es ermöglicht, die Vertikalkräfte unabhängig von dem Einfederungsgrad der Nutzfahrzeugfeder stets in einer der tatsächlichen Fahrpraxis entsprechenden Weise einzuleiten, so daß die entsprechenden, oben erörterten Verfälschungen vermieden werden. Es ergeben sich geringe Federwege, insbesondere kann eine Vertikalkraftvorlast aufgebracht werden, der eine niedrig- und/oder höherfrequente Vertikalkraftbelastung überlagert werden kann. Diese und weitere Vorteile sind weiter unten in näheren Einzelheiten erläutert.

In Weiterbildung der Erfindung wird ein Verfahren zur Verfügung gestellt, bei dem die Nutzfahrzeugachse und/oder -feder und/oder die andere(n) Komponente(n) anstatt mit Vertikalkräften oder zusätzlich hierzu mit Seitenkräften und/oder Längskräften und/oder Brems- bzw. Antriebskräften der beim Nutzfahrzeugbetrieb auftretenden Art ausgesetzt wird, die über diejenige Anbringungsstelle der Nutzfahrzeugfeder zugeführt werden, die ihrer Befestigung an der Nutzfahrzeugachse entspricht und/oder über die Nutzfahrzeugachse. Diese Weiterbildung zeichnet sich erfindungsgemäß dadurch aus, daß zur Prüfung der Nutzfahrzeugfeder und/oder der damit verbundenen Nutzfahrzeugachse und/oder der anderen Komponente(n) unter betriebsähnlichen Belastungsbedingungen die Seitenkräfte und/oder Längskräfte und/oder Brems- bzw. Antriebskräfte über die an der Nutzfahrzeugfeder angebrachte Nutzfahrzeugachse bzw. über wenigstens ein an letzterer angebrachtes Rad oder wenigstens einen daran angebrachten Radersatz und gegebenenfalls durch einen Bremskrafteinleitungshebel in die Nutzfahrzeugachse und/oder -feder und/oder die andere(n) Komponente(n) eingeleitet werden.

Eine noch weitergehendere Weiterbildung des erfindungsgemäßen Verfahrens zeichent sich dadurch aus, daß zur Prüfung der Nutzfahrzeugachse und/oder von zwei Nutzfahrzeugfedern und/oder der anderen Komponente(n) unter betriebsähnlichen Belastungsbedingungen mittels des Halterungsaufbaus wenigstens zwei Nutzfahrzeugfedern, bevorzugt in der ihrer Befestigung an einem Nutzfahrzeugaufbau entsprechenden Weise, besonders bevorzugt mittels Originalanbauteilen, gehalten werden, die an die Nutzfahrzeugachse angebaut sind, welche beidseitig mit Rädern oder Radersatz, gegebenenfalls durch je einen Bremskrafteinleitungshebel ergänzt, versehen ist.

Hierbei kann die Nutzfahrzeugachse, abgesehen von Vertikalverlagerungen, die gegenüber dem maximalen Ein- und Ausfederungsweg der Nutzfahrzeugfeder(n) geringfügig sind, insbesondere kleiner als 10%, vorzugsweise kleiner als 5%, des maximalen Ein- und Ausfederungswegs der Nutzfahrzeugfeder betragen, in Ein- und Ausfederungsrichtung ortsfest gehalten werden. Das entspricht in hohem Maße betriebsähnlichen Bedingungen.

Der Halterungsaufbau kann verschwenkbar um eine in der Einfederungsrichtung parallelverschiebbare Drehachse gehalten werden, die ihrerseits vorzugsweise senkrecht zur Einfederungsrichtung und senkrecht zur Axialrichtung der Nutzfahrzeugradachse verlaufen kann.

Wenn das Verfahren mit zwei Nutzfahrzeugfedern ausgeführt wird, kann die Drechachse längs einer Geraden parallelverschiebbar geführt werden, deren Punkte alle den gleichen Abstand von beiden Nutzfahrzeugfedern haben.

Weiter ist es zu bevorzugen, daß die Drechachse im unbelasteten oder statisch belasteten Zustand des Halterungsaufbaus in der Ebene der Nutzfahrzeugfederbefestigung, insbesondere der Federbuchsen bzw. Federböcke, plus oder minus der Höhe der Nutzfahrzeugfeder, gehalten wird.

Besonders kurze Einfederungs- und Ausfederungswege ergeben sich, wenn die Vertikalkräfte in der Wirkungslinie oder dicht an der Wirkungslinie der Nutzfahrzeugfeder oder -federn angreifen.

Außerdem kann das Verfahren mit zwei Nutzfahrzeugfedern so ausgestaltet sein, daß die Vertikalkräfte derart an dem Halterungsaufbau angreifen, daß sie simultan wirkend eine symmetrische Einfederung beider Nutzfahrzeugfedern erzeugen, und daß sie wechselseitig wirkend eine Einfederung der einen Nutzfahrzeugfeder bei gleichzeitiger Ausfederung der anderen Nutzfahrzeugfeder erzeugen.

Zur Prüfung von zwei Nutzfahrzeugfedern allein kann die Einleitung der Seitenkraft und der Brems- bzw. Antriebskraft zwischen den Nutzfahrzeugachsenenden, insbesondere mittig zwischen den Nutzfahrzeugachsenenden, über je eine von hier mit dem Rad oder Radersatz bzw. dem Bremskrafteinleitungshebel des einen und des anderen Nutzfahrzeugachsenendes verbundene Kraftübertragung erfolgen, und es brauchen nur an einer Stelle Längskräfte eingeleitet zu werden.

Schließlich können höherfrequente Vertikalkräfte über die Nutzfahrzeugachse, insbesondere über wenigstens ein daran angebrachtes Rad, einen daran angebrachten Radersatz oder einen daran angebrachten Bremskrafteinleitungshebel in die Nutzfahrzeugachse und/oder -feder(n) und/oder anderen Komponente(n) eingeleitet werden.

Der Prüfstand ist bevorzugt so ausgebildet, daß der Halterungsaufbau um eine, vorzugsweise horizontale, Drehachse verschwenkbar gelagert ist. Weiter ist vorgesehen, daß die Drehachse mittels wenigstens einer, vorzugsweise vertikalen, Führung parallelverschiebbar geführt ist. Insbesondere kann die Drehachse beidseitig von dem Halterungsaufbau mittels je einer Führung geführt sein.

Von besonderem Vorteil ist es, wenn die Drehachse im unbelasteten Zustand des Halterungsaufbaus in der Ebene der vorgesehenen Nutzfahrzeugfederbefestigung, insbesondere der Federbuchsen bzw. Federböcke,plus oder minus der Höhe der unbelasteten Nutzfahrzeugfeder angeordnet ist.

Der Halterungsaufbau ist in einer besonders bevorzugten Ausführungsform der Erfindung an wenigstens zwei Vertikalkrafterzeuger angekoppelt, deren Ankopplungsstellen am Halterungsaufbau symmetrisch zur Drehachse sind. Der oder die Vertikalkrafterzeuger kann bzw. können derart an den Halterungsaufbau angekoppelt sein, daß die Ankopplungsstellen in der Wirkungslinie der Nutzfahrzeugfedern liegen.

Die Erfindung sei nachstehend anhand einiger besonders bevorzugter Ausführungsformen unter Bezugnahme auf die Zeichnungen näher erläutert; es zeigen:
- Fig. 1: eine Darstellung eines Nutzfahrzeugs von vorn, wobei auf der linken Seite aus Darstellungsgründen Teile weggelassen sind;
- Fig. 2: das Nutzfahrzeug der Fig. 1 von der Seite, wobei ebenfalls Teile weggelassen sind;
- Fig. 3: eine Darstellung der Ein- und Ausfederungsverhältnisse, wie sie sich bei einem Nutzfahrzeug in der Praxis ergeben;
- Fig. 4: eine Darstellung der Ein- und Ausfederungsverhältnisse, wie sie den bekannten Versuchsständen entsprechen, die oben diskutiert wurden;
- Fig. 5: eine Ansicht einer Ausführungsform einer erfindungsgemäßen Vorrichtung zum Prüfen von Nutzfahrzeugachsen und/oder -federn und angrenzender Komponenten; und
- Fig. 6: eine Ansicht der Ausführungsform der Vorrichtung nach der Erfindung gemäß der Linie A-A in Fig. 8.

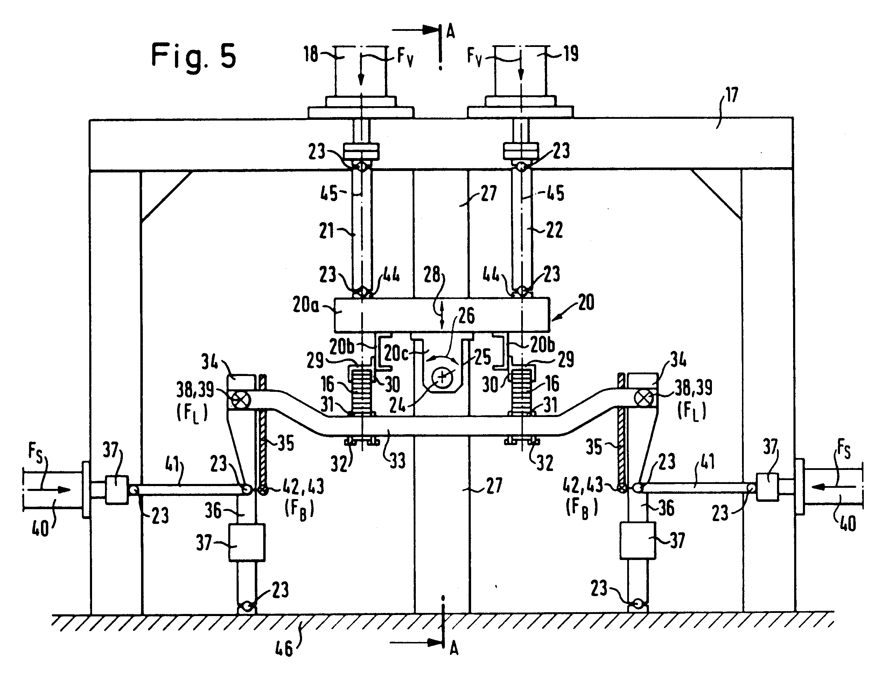

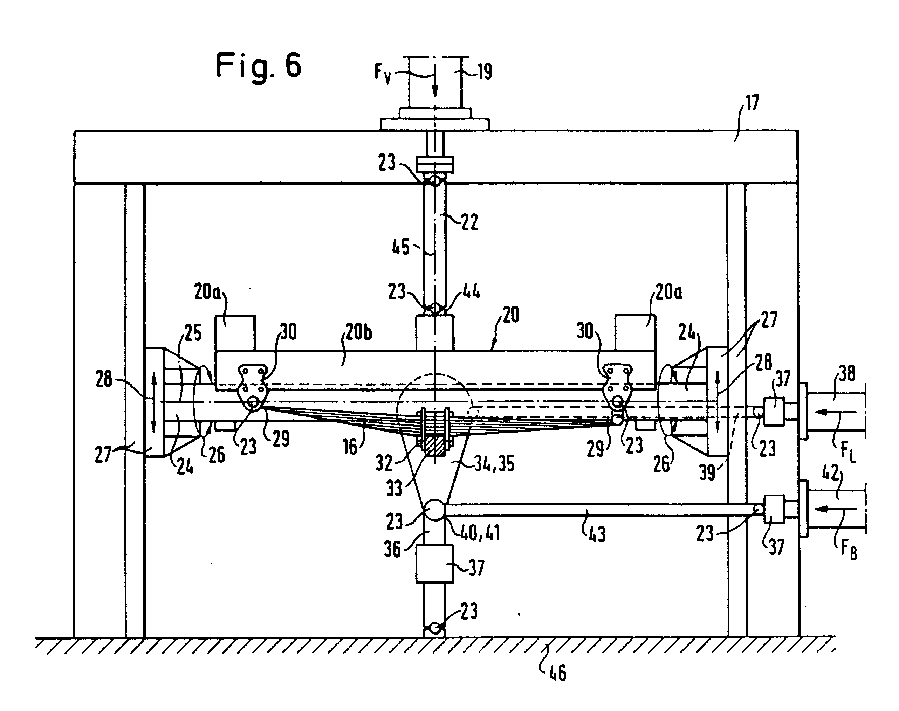

Es sei nun im einzelnen auf die Figuren 5 und 6 eingegangen, wonach die darin gezeigte Vorrichtung zum Prüfen von Nutzfahrzeugfedern 16, die einen Rahmen, ein Gestell, ein Gerüst o.dgl. 17 aufweist, so ausgebildet ist, daß die Nutzfahrzeugfedern 16 Vertikalkräften F_{V} der beim Nutzfahrzeugbetrieb auftretenden Art ausgesetzt werden. Diese Vertikalkräfte F_{V} werden jeweils mittels eines Vertikalkrafterzeugers 18 und 19 erzeugt.

Die Vertikalkrafterzeuger 18 und 19 sind in der dargestellten Ausführungsform am oberen Teil des Rahmens 17 so angebracht, daß die Wirkrichtung der Vertikalkräfte F_{V} senkrecht verläuft, da sich hierdurch die für die Prüfung der Nutzfahrzeugfedern 16 und die Gesamtanordnung der Vorrichtung günstigste Anordnung ergibt. Es sei jedoch hier darauf hingewiesen, daß es grundsätzlich möglich ist, die Vertikalkrafterzeuger 18 und 19 sowie überhaupt die gesamte Vorrichtung in einer anderen als der in den Figuren 5 und 6 dargestellten Lage anzuordnen, die im Prinzip jeder beliebigen Drehung der Figuren 5 und 6 in der Zeichnungsebene entsprechen kann. Obwohl nicht alle diese Lagen günstig sind, umfaßt die Erfindung alle diese Möglichkeiten, insbesondere auch die Möglichkeit einer waagrechten Anordnung der Vertikalkrafterzeuger 18 und 19, wie sie beispielsweise auch bei der bekannten Vorrichtung nach Druckschrift 1 angewandt wird. Wenn daher hier in der Beschreibung die Ausrichtungen und Anordnungen der Teile der Vorrichtung nach den Figuren 5 und 6 horizontal, vertikal oder dergleichen angegeben sind, so sind das nur bevorzugte Ausrichtungen, zu denen jeweils im Prinzip ein beliebiger, für alle Ausrichtungen jeweils gleicher Winkel hinzuaddiert werden kann, insbesondere ein Winkel von 90°. Außerdem sei darauf hingewiesen, daß selbst in der Anordnung gemäß den Figuren 5 und 6 die Vertikalkrafterzeuger 18 und 19 auch im unteren Bereich des Rahmens 17 bzw. im Bereich des Fundaments 46 angeordnet sein können, jedoch ist diese Anordnung deswegen nicht besonders vorteilhaft, weil dann die Ankopplung an die vorliegend als Blattfedern ausgeführten Nutzfahrzeugfedern 16 über den weiter unten noch zu erläuternden Halterungsaufbau 20 etwas schwieriger wird und der Raum für die Unterbringung der Vertikalkrafterzeuger 18 und 19 im unteren Bereich relativ beengt ist.

Die beiden Vertikalkrafterzeuger 18 und 19 sind über je eine Krafteinleitungsstange 21 und 22 mit zwischengefügten Gelenken 23 an den Halterungsaufbau 20 angekoppelt, der seinerseits aus einem Hilfsrahmen 20a, einem Längsrahmen 20b und einer Drehachsenlagerung oder -halterung 20c besteht, die untereinander fest und starr verbunden sind.

In der Drehachsenlagerung 20c ist, wie schon deren Bezeichnung ausdrückt, eine Drehachse 24 gelagert, die sich horizontal erstreckt und zusammen mit der Drehlagerung 20c ein Drehgelenk für den Halterungsaufbau 20 bildet, so daß dieser um die Axiallinie 25 der Drehachse 24 kipp- bzw. verschwenkbar ist, wie durch die Doppelpfeile 26 in den Figuren 5 und 6 angedeutet ist.

Die Drehachse 24 ihrerseits ist an ihren beiden Enden mittels je einer Linearführung 27 vertikal parallelverschiebbar geführt. Diese Linearführungen 27 sind vorzugsweise, wie dargestellt, an gegenüberliegenden senkrechten Trägern des Rahmens 17 angebracht. Die Parallelverschiebbarkeit der Drehachse 24 in vertikaler Richtung ist in den Figuren 5 und 6 durch Doppelpfeile 28 angedeutet.

Auf diese weise ist der Halterungsaufbau 20 gleichzeitig um eine horizontale Achse 25 kippbar und in Vertikalrichtung parallelverschiebbar gelagert bzw. geführt. Zwar ist diese Art der beweglichen Lagerung und Führung des Halterungsaufbaus 20, wie sich bei den Untersuchungen und Versuchen, die zur folgenden Erfindung geführt haben, gezeigt hat, besonders zu bevorzugen, jedoch ist die Erfindung keineswegs auf diese besondere Art der beweglichen Lagerung und Führung des Halterungsaufbaus beschränkt, sondern sie umfaßt vielmehr grundsätzlich alle beweglichen Führungen und Lagerungen des Halterungsaufbaus 20, die es gestatten, über denselben Ein- und Ausfederungsbewegungen von einer oder mehreren Nutzfahrzeugfedern 16 aufzunehmen, und zwar insbesondere in der Weise, wie sie unter betriebsähnlichen Belastungsbedingungen solcher Nutzfahrzeugfedern 16 stattfinden.

Während die Vertikalkrafterzeuger 18 und 19 an die obere Seite des Halterungsaufbaus 20 angekoppelt sind, sind die Nutzfahrzeugfedern 16 am unteren Teil, vorliegend am Längsrahmen 20b, des Halterungsaufbaus 20 befestigt, und zwar an denjenigen ihrer Anbringungsstellen 29, die ihrer Befestigung am Nutzfahrzeugaufbau entsprechen, wobei z.Bsp. diese Befestigung mittels Federböcken 30 ausgeführt ist.

Die beiden Nutzfahrzeugfedern 16 sind an ihrer den Anbringungstellen 29 entgegengesetzten Anbringungsstelle 31, die der Befestigung der Nutzfahrzeugfedern 16 an der Nutzfahrzeugachse entspricht, über entsprechende Befestigungsvorrichtungen 32, beispielsweise Federbuchsen, an einer Nutzfahrzeugachse 33 befestigt. An den beiden Enden dieser Fahrzeugachse ist je ein Radersatz 34 und je ein Bremskrafteinleitungshebel 35 angebracht, wobei der jeweilige Radersatz 34 drehbar und der jeweilige Bremskrafteinleitungshebel 35 drehfest an der Nutzfahrzeugachse 33 befestigt ist, und zwar in an sich bekannter und üblicher Weise.

Die Nutzfahrzeugachse 33 ist in Vertikalrichtung im wesentlichen ortsfest gelagert. Unter "im wesentlichen" soll hier verstanden werden, daß die bei weitem größeren Ein- und Ausfederungswege der Nutzfahrzeugfedern 16 durch die Bewegung des Halterungsaufbaus 20 aufgenommen werden und keine oder nur demgegenüber geringfügige Vertikalbewegungen, wie sie in der Fahrpraxis der Nutzfahrzeuge hoch- bzw. höherfrequenten Vertikalkraftbelastungen, die sich beispielsweise aus Stößen durch Fahrbahnunebenheiten ergeben, entsprechen, durch eine korrespondierende geringfügige Vertikalbewegung der Nutzfahrzeugachse 33 aufgenommen werden. Die Nutzfahrzeugachse 33 ist aber, sofern solche hoch- bzw. höherfrequenten Vertikalbelastungen zusätzlich zu den statischen und/oder niederfrequenten Vertikalkraftbelastungen, welche die wesentlichen Ein- und Ausfederungswege bewirken, ebenfalls über den Halterungsaufbau 20 in die Nutzfahrzeugfedern 16 eingeleitet werden, oder sofern gerade keine hoch- bzw. höherfrequenten Vertikalkraftbelastungen zur Einwirkung gebracht werden, in Vertikalrichtung praktisch ortsfest gelagert, und zwar vorliegend über je eine Vertikalabstützung 36, die über Gelenke 23 gelagert und mit dem zugeordneten Radersatz 34 verbunden ist, über den sie das jeweilige Ende der Nutzfahrzeugachse 33 abstützt.

In jeder der beiden Vertikalabstützungen 36 kann eine Kraftmeßeinrichtung 37 oder statt dessen eine zusätzliche Vertikalkrafterzeugungseinrichtung zum Erzeugen der eben erwähnten hoch- bzw. höherfrequenten Vertikalkraftbelastungen vorgesehen sein (nicht dargestellt).

Außerdem ist an jedes Ende der Nutzfahrzeugachse 33 ein Längskrafterzeuger 38 über eine Krafteinleitungsstange 39 und entsprechende Gelenke 23 angekoppelt. Weiterhin ist je ein Seitenkrafterzeuger 40 über je eine Krafteinleitungsstange 41 und Gelenke 23 an den linken bzw. rechten Radersatz 34 angekoppelt. Schließlich ist an jeden der beiden Bremskrafteinleitungshebel 35 je ein Brems- und Antriebskrafterzeuger 42 über je eine Krafteinleitungsstange 43 und Gelenke 23 angekoppelt.

Auf diese Weise können die Nutzfahrzeugfedern 16 (oder auch eine einzelne Nutzfahrzeugfeder) zusammen mit oder ohne angrenzende Komponenten, wie beispielsweise Nutzfahrzeugachse, Achsschenkel, Federböcke, Rahmenanschlüsse von Nutzfahrzeugen o.dgl. auf Festigkeit unter betriebsähnlichen, zufallsartigen Belastungen, wie sie dem Fahrbetrieb von Nutzfahrzeugen in der Praxis entsprechen, geprüft werden. Wenn es gewünscht wird, nur die Nutzfahrzeugfedern 16 allein zu prüfen, dann wird eine, insbesondere starre Verbindung als Vorrichtung zum gleichzeitigen Ankoppeln des Rades oder Radersatzes 34 bzw. des Bremskrafteinleitungshebels 35 von jedem der beiden Enden der Nutzfahrzeugachse 33 an einen gemeinsamen Seitenkrafterzeuger bzw. gemeinsamen Brems- und Antriebskrafterzeuger verwendet, wobei die Seitenkraft in der Längsmitte der starren Verbindung zwischen dem rechten und linken Radersatz 34 und die Brems- bzw. Antriebskraft in der Längsmitte der starren Verbindung zwischen den Bremskrafteinleitungshebeln 35, also an einer der Längsmitte der Nutzfahrzeugachse 33 entsprechenden Stelle, eingeleitet wird. In diesem Falle braucht nur einer der Längskrafterzeuger verwendet zu werden (nicht dargestellt).

Wie weiter aus Fig. 5 ersichtlich ist, sind die Ankopplungsstellen 44 der beiden Vertikalkrafterzeuger 18 und 19 an dem Halterungsaufbau 20 symmetrisch zur Axiallinie 25 der Drehachse 24. Auf diese Weise greifen die Vertikalkräfte derart an dem Halterungsaufbau 20 an, daß sie simultan wirkend eine symmetrische Einfederung beider Nutzfahrzeugfedern 16 erzeugen, und daß sie wechselseitig wirkend eine Einfederung der einen Nutzfahrzeugfeder 16 bei gleichzeitiger Ausfederung der anderen Nutzfahrzeugfeder 16 erzeugen.

Die Ankopplungsstellen 44 der Vertikalkrafterzeuger 18 und 19 sind weiter je in einer Wirkungslinie 45 einer Nutzfahrzeugfeder 16 angeordnet. Auf diese Weise ergibt sich ein kurzer Kraftweg bei guter Kraftausnutzung. Die Ankopplungsstellen 44 können aber auch benachbart den Wirkungslinien 45 oder im Bereich zwischen den Wirkungslinien 45 liegen.

Die Drehachse 24 ist in der bevorzugten Ausführungsform der Vorrichtung, wie Fig. 5 zeigt, im statisch belasteten oder unbelasteten Zustand des Halterungsaufbaus 20 in der Ebene der Nutzfahrzeugfederbefestigung am Halterungsaufbau 20, insbesondere in der Ebene der Federböcke 30, angeordnet. Diese Höhe kann verstellbar sein, indem die Drehachsenlagerung 20c in senkrechter Richtung relativ zu dem Halterungsaufbau 20 verstellbar ausgebildet wird. Insbesondere kann die Verstellbarkeit so sein, daß die Drehachse innerhalb eines Bereichs von plus und minus der Höhe der unbelasteten Nutzfahrzeugfedern 16 um die Höhe der Ebene der Federböcke 30 herum verstellbar ist.

Mit der Vorrichtung und dem Verfahren nach der Erfindung können mittels der Originalbauteile bei Originalabmessungen die aus Fahrbetriebsmessungen ermittelten Lastabläufe oder synthetische Abläufe direkt simuliert werden, und zwar insbesondere folgende Lastfälle:
(a) Lastfall Geradeausfahrt durch quasistatische symmetrische Vertikalkräfte und überlagerte wechselseitige Vertikalkräfte mittels der Vertikalkrafterzeuger 18 und 19, und zwar mit oder ohne Seitenkräfte. Ergänzend dazu können symmetrische und asymmetrische Längskräfte, wie sie aus Bodenunebenheiten resultieren, mittels der Längskrafterzeuger 38 hierzu überlagert werden.
(b) Lastfall Kurvenfahrt mit Links- und Rechtskräften durch wechselseitige Vertikalkräfte und Seitenkräfte, wobei jeweils die eine Seite mit hohen Vertikalkräften und entsprechend zur Fahrzeugmitte gerichteten Seitenkräften beaufschlagt wird, während die andere Seite mit niedrigeren Vertikalkräften und zur Fahrzeugaußenseite gerichteten Seitenkräfte beaufschlagt wird.
(c) Lastfall Bremsen und Beschleunigen durch symmetrische Vertikalkräfte und nach hinten bzw. nach vorne gerichtete Brems- bzw. Beschleunigungskräfte.

Das Verfahren und die Vorrichtung nach der vorliegenden Erfindung erbringen in ihrer Grundform und/oder in ihren Ausgestaltungen insbesondere folgende Vorteile:
(1) Die Nutzfahrzeugachse 33 bleibt unter Belastung, insbesondere unter Vertikalkraftbelastung, parallel zur Horizontalebene, der die Fläche des Fundaments 46 der Vorrichtung der Figuren 5 und 6 entspricht. Infolgedessen wirken die Vertikalkräfte unabhängig von der Ein- und Ausfederung der Nutzfahrzeugfedern (oder auch einer einzigen Nutzfahrzeugfeder, wenn der Aufbau entsprechend ist) immer in gleicher Richtung, nämlich rechtwinklig auf die Nutzfahrzeugachse 33 ein. Auch die Einwirkungsrichtung der Seitenkräfte bleibt unabhängig von dem Ein- und Ausfederungsgrad immer, wie vorgesehen, parallel zur Nutzfahrzeugachse 33.
(2) Durch das Feststehen der Nutzfahrzeugachse 33 in Bezug auf das Fundament 46 bzw. die Horizontalebene, entstehen keine Koppelfehler durch gegenseitige Beeinflussung von Seiten-, Brems- und Längskräften.
(3) Da der Halterungsaufbau 20 mittels der Vertikalführung 27 geführt und in der Längsachse mittels der Drehachse 24 drehbar gelagert ist, werden die Ein- und Ausfederungswege vollständig oder doch zum weitaus größten Teil durch den Halterungsaufbau 20 aufgenommen.
(4) Dadurch, daß sich die Axiallinie 25 der Drehachse in der Ebene der Federbefestigung 30 am Halterungsaufbau 20 befindet, ergeben sich geringe zeitliche Bewegungen bei senkrechter Einfederung.
(5) Da die Nutzfahrzeugachse 33 über einen an jedem axialen Ende befindlichen Radersatz 34 auf der Horizontalebene (Fundament 46) abgestützt ist, bleibt die Nutzfahrzeugachse 33 in Vertikalrichtung ortsfest, wobei aber eine Seitenverschiebungsmöglichkeit eingebaut bzw. vorgesehen ist.
(6) Die Vertikalkrafterzeuger 18 und 19 können bei simultaner Betätigung eine symmetrische Einfederung und bei wechselseitiger Betätigung eine Einfederung der einen Nutzfahrzeugfeder 16 und eine Ausfederung der anderen Nutzfahrzeugfeder 16 bewirken.
(7) Durch simultane Betätigung der Vertikalkrafterzeuger 18, 19 kann eine Vorlast aufgebracht werden (entsprechend dem Gewicht des Aufbaus des Nutzfahrzeugs), wobei durch eine überlagerte wechselseitige Betätigung der Vertikalkrafterzeuger 18, 19 eine nieder- oder höherfrequente vertikale, wechselseitige Einfederung beider Nutzfahrzeugfedern 16 mit geringem Federweg erzielbar ist.
(8) Die Reaktionskräfte werden über den Radersatz 34 in die Achsschenkel und die Nutzfahrzeugachse 33 eingeleitet.
(9) Es können Originalteile verwendet werden, wobei zwei Nutzfahrzeugfedern 16 und angrenzende Komponenten gleichzeitig geprüft werden können.
(10) Durch die Verwendung von Originalteilen können die geometrischen Beziehungen konstant gehalten werden, so daß die aus Fahrzeugmessungen im Radaufstandspunkt ermittelten Kräfte direkt zur Simulation und zum Festigkeitsnachweis verwendet werden können. Die betriebsähnlichen Verformungen und Einfederungen der Nutzfahrzeugfedern ergeben sich dann automatisch hieraus. Infolge geringer gegenseitiger Beeinflussung und geringer Koppelfehler ist keine aufwendige Geometriekorrektur erforderlich.
(11) Die Seitenkraft wird über mindestens einen an dem Radersatz 34, insbesondere Radersatzhebeln,angreifenden Seitenkrafterzeuger 40 in die Nutzfahrzeugachse 33 und die Nutzfahrzeugfeder 16 eingeleitet.
(12) Die Bremskraft und die Beschleunigungskraft werden durch je einen an den Bremskrafteinleitungshebel 35 angreifenden Brems- und Antriebskrafterzeuger 42 eingeleitet.
(13) Die Längskräfte werden durch zwei Längskrafterzeuger 38 in die Achsschenkel eingeleitet.
(14) Durch die Anordnung der Vertikalkrafterzeuger 18, 19 in oder dicht an der Wirkungslinie der Nutzfahrzeugfedern 16 sind keine größeren Vertikalkraftwege als die Federwege selbst erforderlich.
(15) Durch zusätzliches Anbringen zweier Vertikalkrafterzeuger an der Stelle der Vertikalabstützungen 36 können hochfrequente Zusatzbelastungen aufgebracht werden. Damit kann eine Trennung langsamer Bewegungen, welche durch die Vertikalkrafterzeuger 18 und 19 simuliert werden, und schneller Bewegungen, welche durch die erwähnten Vertikalkrafterzeuger, die in den Vertikalabstützungen 36 oder anstelle der Vertikalabstützungen 36 vorgesehen sind, bewirkt werden. Hierdurch kann eine erhebliche Reduzierung von Hydraulik, Öl und Energie erzielt werden.
(16) In der Vorrichtung kann durch Verwendung von Originalrädern und Reifen von Nutzfahrzeugen anstelle des Radersatzes 34 eine Prüfung dieser Originalräder und Reifen erfolgen.
(17) Anstelle von Blattfedern als Nutzfahrzeugfedern 16 können auch Schraubenfedern oder Luftbalgfedern oder andere Federn geprüft werden.
(18) Es ist eine Prüfung von Achsen, Achsschenkeln, Rahmen, Federbefestigungselementen und dergleichen, insbesondere in ihrer Originalausführung, möglich.
(19) Die erfindungsgemäße Vorrichtung kann auch zum Prüfen von einer oder mehreren Nutzfahrzeugfedern allein verwendet werden.
(20) Schließlich können die eingeleiteten Vertikal-, Seiten-, Längs- und Brems- bzw. Antriebskräfte unabhängig voneinander durch Kraftmeßeinrichtungen 37 ermittelt werden, wie sie vorliegend für die Messung der Vertikalkraft in der Vertikalabstützung 36 vorgesehen sind (Messung der Reaktions-Vertikalkraft), und die für die Messung der Seitenkraft, der Längskraft und der Brems- bzw. Antriebskraft jeweils im Kraftübertragungsweg des jeweiligen Seitenkrafterzeugers 40, Längskrafterzeugers 38 und Brems- bzw. Antriebskrafterzeugers 42 vorgesehen sind, wie die Figuren 5 und 6 zeigen.

Es sei hier darauf hingewiesen, daß es sich bei den erwähnten statischen und nieder- bzw. niedrigfrequenten Vertikalkräften um solche handelt, die dem Gewicht des Nutzfahrzeugs im unbeladenen oder beladenen Zustand entsprechen und um langsamen Auf- und Abwärtsbewegungen des Nutzfahrzeugs bzw. von dessen Aufbau, welche eine Frequenz von vorzugsweise unter 5 Hz, hauptsächlich um 2 Hz, haben. Dagegen handelt es sich bei den hoch- bzw. höherfrequenten Vertikalkräften um Zusatzbelastungen, die Stößen aus Fahrbahnunebenheiten entsprechen und deren Frequenz ca. 10 bis 20 Hz oder mehr, zum Beispiel 20-30 Hz, beträgt. Diesen hoch- bzw. höherfrequenten Vertikalkräften entsprechen nur geringe Ein- und Ausfederungswege im Vergleich mit den durch die statischen und nieder- bzw. niedrigfrequenten Vertikalkräfte bewirkten Ein- und Ausfederungswegen bei Simulierung betriebsähnlicher Bedingungen.

Weiter sei darauf hingewiesen, daß die erfindungsgemäße Vorrichtung gewünschtenfalls nur für das Prüfen von einer oder mehrerer an die Nutzfahrzeugfeder(n) und/oder -achse angrenzenden Komponenten verwendet werden kann, auch wenn die Nutzfahrzeugachse und/oder die Nutzfahrzeugfeder(n) in die Vorrichtung eingebaut ist bzw. sind.

## Patentansprüche

1. Verfahren für das Prüfen eines Achsenaufbaus (16, 30, 32, 33) eines Nutzfahrzeugs, der Wenigstens eine Nutzfahrzeugachse (33) und Nutzfahrzeugfedern (16) umfaßt, die an denjenigen Anbringungsstellen (29) befestigt sind, die ihrer Befestigung an dem Nutzfahrzeugaufbau entsprechen, worin der Achsenaufbau (16, 30, 32, 33) mittels Vertikalkräften (F_{V}) der beim Nutzfahrzeugbetrieb auftretenden Art geprüft wird, umfassend die folgenden Verfahrensschritte:
(a) Abstützen des Achsenaufbaus (16, 30, 32, 33);
(b) Erzeugen von mindestens solchen ersten Vertikalkräften (F_{V}), die einer statischen und/oder niederfrequenten Belastung des Achsenaufbaus (16, 30, 32, 33) entsprechen; und
(c) Ankoppeln der ersten Vertikalkräfte (F_{V}) an den Achsenaufbau (16, 30, 32, 33);
dadurch **gekennzeichnet,** daß
(1) die Nutzfahrzeugfedern (16) über ihre Anbringungsstellen (29), die ihrer Befestigung an dem Nutzfahrzeugaufbau entsprechen, an einer in der Einfederungsrichtung (45) der Nutzfahrzeugfedern (16) geführten und um eine Drehachse (24) drehbaren Aufhängevorrichtung (20) befestigt werden;
(2) die ersten Vertikalkräfte (F_{V}) über die Aufhängevorrichtung (20) für die Nutzfahrzeugfedern (16) an den Achsenaufbau (16, 30, 32, 33) angekoppelt werden, wobei die Aufhängevorrichtung (20) gemäß den Einfederungen bewegt wird, welche den statischen und niederfrequenten Belastungen durch die ersten Vertikalkräfte (F_{V}) entsprechen; und
(3) die Nutzfahrzeugachse (33) in der Wirkrichtung der ersten Vertikalkräfte (F_{V}) im wesentlichen ortsfest oder über Vertikalkrafterzeuger zum Erzeugen von höherfrequenten, zweiten Vertikalkräften, deren Auslenkungen gering gegenüber den durch die ersten Vertikalkräfte (F_{V}) verursachten Auslenkungen sind, abgestützt wird.

2. Verfahren nach Anspruch 1, dadurch **gekennzeichnet,** daß die Nutzfahrzeugachse (33) abgesehen von Verlagerungen, die gegenüber dem maximalen Ein- und Ausfederungsweg der Nutzfahrzeugfedern (16) geringfügig sind, insbesondere weniger als 10%, vorzugsweise weniger als 5%, des maximalen Ein- und Ausfederungswegs der Nutzfahrzeugfedern (16) betragen, in Ein- und Ausfederungsrichtung ortsfest gehalten wird.

3. Verfahren nach Anspruch 1 oder 2, dadurch **gekennzeichnet,** daß die Aufhängevorrichtung (20) derart bewegungsgeführt gehalten wird, daß die Drehachse (24) in der Einfederungsrichtung (45) der Nutzfahrzeugfedern (16) parallelverschiebbar ist.

4. Verfahren nach Anspruch 1, 2 oder 3, dadurch **gekennzeichnet,** daß die Drehachse (24) senkrecht zur Einfederungsrichtung (45) der Nutzfahrzeugfedern (16) und senkrecht zur Axialrichtung der Nutzfahrzeugachse (33) gehalten wird.

5. Verfahren nach einem der Ansprüche 1 bis 4 mit zwei Nutzfahrzeugfedern (16), dadurch **gekennzeichnet,** daß die Drehachse (24) längs einer Geraden parallelverschiebbar geführt wird, deren Punkte alle den gleichen Abstand von beiden Nutzfahrzeugfedern (16) haben.

6. Verfahren nach einem der Ansprüche 1 bis 5, dadurch **gekennzeichnet,** daß die Drehachse (24) im unbelasteten oder statisch belasteten Zustnad der Aufhängevorrichtung (20) innerhalb eines Bereichs gehalten wird, welcher ausgehend von der Ebene der Anbringungsstellen (29) der Nutzfahrzeugfedern (16) an der Aufhängevorrichtung (20) plus und minus der Höhe der unbelasteten Nutzfahrzeugfedern (16) beträgt.

7. Verfahren nach einem der Ansprüche 1 bis 6, dadurch **gekennzeichnet,** daß die ersten Vertikalkräfte (F_{V}) in der Wirkungslinie (45) oder benachbart der Wirkungslinie (45) der Nutzfahrzeugfedern (16) oder im Bereich zwischen den Wirkungslinien (45) von wenigstens zwei Nutzfahrzeugfedern (16) angreifen gelassen werden.

8. Verfahren nach einem der Ansprüche 1 bis 7 mit zwei Nutzfahrzeugfedern (16), dadurch **gekennzeichnet,** daß die ersten Vertikalkräfte (F_{V}) derart an der Aufhängevorrichtung (20) angreifen gelassen werden, daß sie simultan wirkend eine symmetrische Einfederung beider Nutzfahrzeugfedern (16) erzeugen, und daß sie wechselseitig wirkend eine Einfederung der einen Nutzfahrzeugfeder (16) bei gleichzeitiger Ausfederung der anderen Nutzfahrzeugfeder (16) erzeugen.

9. Verfahren nach einem der Ansprüche 1 bis 8, dadurch **gekennzeichnet,** daß die höherfrequenten, zweiten Vertikalkräfte über wenigstens ein Rad, einen Radersatz (34) oder einen Bremskrafteinleitungshebel (35), das bzw. der an der Nutzfahrzeugachse (16) angebracht ist, eingeleitet werden.

10. Verfahren nach einem der Ansprüche 1 bis 9, dadurch **gekennzeichnet,** daß zwei erste Vertikalkrafterzeuger (18, 19) zum Erzeugen der ersten Vertikalkräfte (F_{V}) verwendet werden.

11. Verfahren nach einem der Ansprüche 1 bis 10, dadurch **gekennzeichnet,** daß wenigstens zwei Nutzfahrzeugfedern (16), bevorzugt in der ihrer Befestigung an einem Nutzfahrzeugaufbau entsprechenden Weise, besonders bevorzugt mittels Originalanbauteilen, gehalten werden, die an die Nutzfahrzeugachse (33) angebaut sind, welche beidseitig mit Rädern oder Radersatz (34), gegebenenfalls durch je einen Bremskrafteinleitungshebel (35) ergänzt, versehen ist.

12. Verfahren nach einem der Ansprüche 1 bis 11, dadurch **gekennzeichnet,** daß der Achsenaufbau (16, 30, 32, 33) zusätzlich Seitenkräften (F_{S}) und/oder Längskräften (F_{L}) und/oder Brems- bzw. Antriebskräften (F_{B}) der beim Nutzfahrzeugbetrieb auftretenden Art unter betriebsähnlichen Belastungsbedingungen ausgesetzt wird, wobei die Seitenkräfte (F_{S}) und/oder Längskräfte (F_{L}) und/oder die Brems- bzw. Antriebskräfte (F_{B}) über die Nutzfahrzeugachse (33) bzw. über wenigstens ein an letzterer angebrachtes Rad oder wenigstens einen daran angebrachten Radersatz (34) bzw. gegebenenfalls durch einen Bremskrafteinleitungshebel (35) eingeleitet werden.

13. Verfahren nach Anspruch 12, dadurch **gekennzeichnet,** daß die Seitenkräfte (F_{S}) und die Brems- bzw. Antriebskräfte (F_{B}) zwischen den Nutzfahrzeugachsenenden, insbesondere mittig zwischen den Nutzfahrzeugachsenenden, über je eine von hier mit dem Rad oder Radersatz (34) bzw. dem Bremskrafteinleitungshebel (35) des einen und des anderen Nutzfahrzeugachsenendes verbundene, vorzugsweise starre, Kraftübertragung eingeleitet werden, und daß nur an einer Stelle Längskräfte (F_{L}) eingeleitet werden.

14. Prüfstand für das Prüfen eines Achsenaufbaus (16, 30, 32, 33) eines Nutzfahrzeugs, der wenigstens eine Nutzfahrzeugachse (33) und Nutzfahrzeugfedern (16) umfaßt, die an denjenigen Anbringungsstellen (29) befestigt sind, die ihrer Befestigung an dem Nutzfahrzeugaufbau entsprechen, worin der Achsenaufbau (16, 30, 32, 33) mittels Vertikalkräften (F_{V}) der beim Nutzfahrzeugbetrieb auftretenden Art geprüft wird, umfassend:
(a) ein Gestell (17);
(b) eine Abstützvorrichtung (34, 36) zum Abstützen des Achsenaufbaus (16, 30, 32, 33);
(c) wenigstens zwei Vertikalkrafterzeuger (18, 19) zum Erzeugen von mindestens solchen Vertikalkräften (F_{V}), die einer statischen und/oder niederfrequenten Belastung des Achsenaufbaus (16, 30, 32, 33) entsprechen; und
(d) eine Ankopplungsvorrichtung (20-23) zum Ankoppeln der Vertikalkrafterzeuger (18, 19) an den Achsenaufbau (16, 30, 32, 33);
dadurch **gekennzeichnet,** daß
(1) die Ankopplungsvorrichtung (20-23) eine in der Einfederungsrichtung (45) der Nutzfahrzeugfedern (16) geführte und um eine Drehachse (24) drehbare Aufhängevorrichtung (20) zum Befestigen der Nutzfahrzeugfedern (16) und zum Ausführen von Bewegungen, welche den durch die statischen und niederfrequenten Belastungen aufgrund der Vertikalkräfte (F_{V}) verursachten Einfederungen entsprechen, umfaßt; und
(2) die Abstützvorrichtung (34, 36) die Nutzfahrzeugachse (33) in der Wirkrichtung der ersten beiden Vertikalkrafterzeuger (18, 19) im wesentlichen ortsfest oder über zweite Vertikalkrafterzeuger für höherfrequente Vertikalkräfte abstützt, deren Auslenkungen gering gegenüber den Auslenkungen der ersten Vertikalkrafterzeuger (18, 19) sind.

15. Prüfstand nach Anspruch 14, dadurch **gekennzeichnet,** daß die Aufhängevorrichtung (20) über wenigstens eine die horizontale Drehachse (24) in der Einfederungsrichtung der Nutzfahrzeugfedern (16) parallelverschiebende Führung (27) geführt ist.

16. Prüfstand nach Anspruch 15, dadurch **gekennzeichnet,** daß die Drehachse (24) beidseitig von der Aufhängevorrichtung (20) mittels je einer Führung (27) geführt ist.

17. Prüfstand nach Anspruch 14, 15 oder 16, dadurch **gekennzeichnet,** daß die an der Aufhängevorrichtung (20) angebrachte Lagerung (20c) der Drehachse (24) im statisch belasteten oder unbelasteten Zustand der Aufhängevorrichtung (20) in einem Bereich angeordnet ist, welcher ausgehend von der Ebene der Anbringungsstellen (29) der Nutzfahrzeugfedern (16) an der Aufhängevorrichtung (20) plus und minus der Höhe der unbelasteten Nutzfahrzeugfedern (16) ist.

18. Prüfstand nach einem der Ansprüche 14 bis 17, dadurch **gekennzeichnet,** daß die Lagerung (20c) der Drehachse (24) relativ zu der Aufhängevorrichtung (20) in der Wirkrichtung der ersten Vertikalkrafterzeuger (18, 19) verstellbar ist.

19. Prüfstand nach einem der Ansprüche 14 bis 18, dadurch **gekennzeichnet,** daß die Ankopplungsstellen (44) der beiden ersten Vertikalkrafterzeuger (18, 19) an der Aufhängevorrichtung (20) symmetrisch zur Drehachse (24) positioniert sind.

20. Prüfstand nach einem der Ansprüche 14 bis 19, dadurch **gekennzeichnet,** daß die Ankopplungsstellen (44) der beiden ersten Vertikalkrafterzeuger (18, 19) in oder benachbart den Wirkungslinien (45) der Nutzfahrzeugfedern (16) oder im Bereich zwischen diesen Wirkungslinien (45) angeordnet sind.

21. Prüfstand nach einem der Ansprüche 14 bis 20, **gekennzeichnet** durch wenigstens einen Seitenkrafterzeuger (40) zum Beaufschlagen des Achsenaufbaus (16, 30, 32, 33) mit Seitenkräften (F_{S}) der beim Nutzfahrzeugbetrieb auftretenden Art unter betriebsähnlichen Belastungsbedingungen über ein Rad oder einen Radersatz (34), das bzw. der an der Nutzfahrzeugachse (33) angebracht ist.

22. Prüfstand nach einem der Ansprüche 14 bis 21, **gekennzeichnet** durch wenigstens einen Längskrafterzeuger (38) zum Beaufschlagen des Achsenaufbaus (16, 30, 32, 33) mit Längskräften (F_{L}) der beim Nutzfahrzeugbetrieb auftretenden Art unter betriebsähnlichen Belastungsbedingungen.

23. Prüfstand nach einem der Ansprüche 14 bis 22, **gekennzeichnet** durch wenigstens einen Brems- oder Antriebskrafterzeuger (42) zum Beaufschlagen des Achsenaufbaus (16, 30, 32, 33) mit Brems- oder Antriebskräften (F_{B}) der beim Nutzfahrzeugbetrieb auftretenden Art unter betriebsähnlichen Belastungsbedinungen über ein Rad oder einen Radersatz (34) oder einen Bremskrafteinleitungshebel (35), das bzw. der an der Nutzfahrzeugachse (33) angebracht ist.

24. Prüfstand nach den Ansprüchen 21, 22 und 23, **gekennzeichnet** durch je zwei Längskrafterzeuger (38), Seitenkrafterzeuger (40) und Brems- oder Antriebskrafterzeuger (42), von denen je einer an ein Ende der Nutzfahrzeugachse (33) ankoppelbar ist.

25. Prüfstand nach den Ansprüchen 21, 22 und 23, **gekennzeichnet** durch eine, insbesondere starre Vorrichtung zum gleichzeitigen Ankoppeln des Rades oder Radersatzes (34) jedes der beiden Enden der Nutzfahrzeugachse (33) an einen gemeinsamen Seitenkrafterzeuger (40) und/oder zum gleichzeitigen Ankoppeln des Bremskrafteinleitungshebels (35) jedes der beiden Enden der Nutzfahrzeugachse an einen gemeinsamen Brems- und Antriebskrafterzeuger (42).

26. Prüfstand nach einem der Ansprüche 14 bis 25, **gekennzeichnet** durch Kraftmeßeinrichtungen (37) in einem oder mehreren der Krafteinleitungswege der Vertikal-, Längs-, Seiten- und/oder Brems- bzw. Antriebskrafterzeuger (38, 40, 42).

27. Prüfstand nach Anspruch 26, dadurch **gekennzeichnet,** daß die Abstützvorrichtung (34, 36) mit Kraftmeßeinrichtungen (37) zum Messen der auf die Nutzfahrzeugfedern (16) wirkenden Vertikalkräfte (F_{V}) versehen ist.

## Claims

1. Process for testing an axle assembly (16, 30, 32, 33) of a goods vehicle, said axle assembly comprising at least one goods-vehicle axle (33) and goods-vehicle springs (16) which are attached to those attachment points (29) which correspond to their attachment to the goods-vehicle superstructure, wherein the axle assembly (16, 30, 32, 33) is tested by means of vertical forces (F_{V}) of the type arising during operation of the goods vehicle, comprising the following process stages:
(a) the supporting of the axle assembly (16, 30, 32, 33);
(b) the generating of at least those first vertical forces (F_{V}) which correspond to a static and/or low-frequency load of the axle assembly (16, 30, 32, 33); and
(c) the coupling of the first vertical forces (F_{V}) to the axle assembly (16, 30, 32, 33);
characterised in that
(1) the goods-vehicle springs (16) are attached, via their attachment points (29) which correspond to their attachment to the goods-vehicle superstructure, to a suspension device (20) which is guided in the compression direction (45) of the goods-vehicle springs (16) and which is rotatable about an axis of rotation (24);
(2) the first vertical forces (F_{V}) are coupled via the suspension device (20) for the goods-vehicle springs (16) to the axle assembly (16, 30, 32, 33), whereby the suspension device (20) is moved in accordance with the compressions which correspond to the static and low-frequency loads due to the first vertical forces (F_{V}); and
(3) the goods-vehicle axle (33) is supported either in the direction in which the first vertical forces (F_{V}) act so as to be essentially fixed or via vertical-force generators for generating higher-frequency second vertical forces, the deflections of which are insignificant compared to the deflections caused by the first vertical forces (F_{V}).

2. Process according to Claim 1, characterised in that, disregarding displacements which are insignificant in comparison with the maximal spring deflection for compression and rebound of the goods-vehicle springs (16), which amount in particular to less than 10%, preferably less than 5%, of the maximal spring deflection, for compression and rebound of the goods-vehicle springs (16), the goods-vehicle axle (33) is held so as to be fixed in the direction of compression and rebound.

3. Process according to Claim 1 or 2, characterised in that the suspension device (20) is held in a manner enabling its movement to be guided so that the axis of rotation (24) is capable of parallel displacement in the compression direction (45) of the goods-vehicle springs (16).

4. Process according to Claim 1, 2 or 3, characterised in that the axis of rotation (24) is maintained perpendicular to the direction of compression (45) of the goods-vehicle springs (16) and perpendicular to the axial direction of the goods-vehicle axle (33).

5. Process according to one of Claims 1 to 4 with two goods-vehicle springs (16), characterised in that the axis of rotation (24) is guided along a straight line capable of parallel displacement, the points of which line are all equidistant from both goods-vehicle springs (16).

6. Process according to one of Claims 1 to 5, characterised in that the axis of rotation (24) in the unloaded or statically loaded state of the suspension device (20) is maintained within a zone which, proceeding from the plane of the attachment points (29) of the goods-vehicle springs (16) on the suspension device (20), amounts to plus or minus the height of the unloaded goods-vehicle springs (16).

7. Process according to one of Claims 1 to 6, characterized in that the first vertical forces (F_{V}) are allowed to act within the line of action (45) or next to the line of action (45) of the goods-vehicle springs (16) or in the zone between the lines of action (45) of at least two goods-vehicle springs (16).

8. Process according to one of Claims 1 to 7 with two goods-vehicle springs (16), characterised in that the first vertical forces (F_{V}) are induced to act on the suspension device (20) in such a manner that, acting simultaneously, they generate a symmetrical compression of both goods-vehicle springs (16) and that, acting alternately, they generate a compression of the one goods-vehicle spring (16) with simultaneous rebound of the other goods-vehicle spring (16).

9. Process according to one of Claims 1 to 8, characterised in that the higher-frequency second vertical forces are induced via at least one wheel, one wheel substitute (34) or one lever (35) for inducing a braking force, said wheel, wheel substitute or lever being mounted on the goods-vehicle axle (16).

10. Process according to one of Claims 1 to 9, characterised in that two first vertical-force generators (18, 19) are used for generating the first vertical forces (F_{V}).

11. Process according to one of Claims 1 to 10, characterised in that at least two goods-vehicle springs (16) are maintained, preferably in a manner corresponding to their attachment to a goods-vehicle superstructure, in particular by means of original add-on parts built on to the goods-vehicle axle (33), which is provided on both sides with wheels or wheel substitute (34), optionally supplemented in each case by a lever (35) for inducing a braking force.

12. Process according to one of Claims 1 to 11, characterised in that the axle assembly (16, 30, 32, 33) is additionally subject to side forces (F_{S}) and/or longitudinal forces (F_{L}) and/or braking or driving forces (F_{B}) of the type arising during operation of the goods vehicle under loading conditions similar to those occurring in operation, whereby the side forces (F_{S}) and/or longitudinal forces (F_{L}) and/or the braking or driving forces (F_{B}) are induced via the goods-vehicle axle (33) or via at least one wheel mounted on the latter or at least one wheel substitute (34) mounted thereon or optionally by means of a lever (35) for inducing a braking force.

13. Process according to Claim 12, characterised in that the side forces (F_{S}) and the braking or driving forces (F_{B}) are induced between the ends of the goods-vehicle axle, in particular centrally between the ends of the goods-vehicle axle, in each case via a drive-line transmission which is preferably rigid and which is connected from the above point with the wheel or wheel substitute (34) or the lever (35) for inducing a braking force pertaining to the one and the other end of the goods-vehicle axle, and that longitudinal forces (F_{L}) are induced at only one place.

14. Test rig for testing an axle assembly (16, 30, 32, 33) of a goods vehicle, said test rig comprising at least one goods-vehicle axle (33) and goods-vehicle springs (16) which are attached to those attachment points (29) which correspond to their attachment to the superstructure of the goods vehicle, wherein the axle assembly (16, 30, 32, 33) is tested by means of vertical forces (F_{V}) of the type arising during operation of the goods vehicle, comprising:
(a) a stand (17);
(b) a supporting device (34, 36) for supporting the axle assembly (16, 30, 32, 33);
(c) at least two vertical-force generators (18, 19) for generating at least those vertical forces (F_{V}) which correspond to a static and/or low-frequency loading of the axle assembly (16, 30, 32, 33); and
(d) a coupling device (20-23) for coupling the vertical-force generator (18, 19) to the axle assembly (16, 30, 32, 33);
characterised in that
(1) the coupling device (20-23) comprises a suspension device (20) which is guided in the compression direction (45) of the goods-vehicle springs (16) and which is capable of rotating about an axis of rotation (24) for attaching the goods-vehicle springs (16) and for carrying out movements which correspond to the compressions caused by the static and lower-frequency loadings owing to the vertical forces (F_{V}); and
(2) the supporting device (34, 36) supports the goods-vehicle axle (33) in the direction in which the first two vertical-force generators (18, 19) act so as to be essentially fixed or via second vertical-force generators for higher-frequency vertical forces, the deflections of which are insignificant in comparison with the deflections of the first vertical-force generators (18, 19).

15. Test rig according to Claim 14, characterised in that the suspension device (20) is guided via at least one guide mechanism (27) which displaces the horizontal axis of rotation (24) in parallel in the compression direction of the goods-vehicle springs (16).

16. Test rig according to Claim 15, characterised in that the axis of rotation (24) is guided on each of the two sides of the suspension device (20) by means of a guide mechanism (27).

17. Test rig according to Claim 14, 15 or 16, characterised in that the bearing (20c) of the axis of rotation (24) mounted on the suspension device (20) is arranged in the statically loaded or unloaded state of the suspension device (20) in a zone which, proceeding from the plane of the attachment points (29) of the goods-vehicle springs (16) on the suspension device (20), is plus or minus the height of the unloaded goods-vehicle springs (16).

18. Test rig according to one of Claims 14 to 17, characterised in that the bearing (20c) of the axis of rotation (24) is capable of being displaced relative to the suspension device (20) in the direction in which the first vertical-force generators (18, 19) act.

19. Test rig according to one of Claims 14 to 18, characterised in that the coupling points (44) of the two first vertical-force generators (18, 19) are positioned on the suspension device (20) symmetrically with regard to the axis of rotation (24).

20. Test rig according to one of Claims 14 to 19, characterised in that the coupling points (44) of the two first vertical-force generators (18, 19) are arranged within or next to the lines of action (45) of the goods-vehicle springs (16) or in the zone between said lines of action (45).

21. Test rig according to one of Claims 14 to 20, characterised by at least one side-force generator (40) for impinging on the axle assembly (16, 30, 32, 33) with side forces (F_{S}) of the type arising during operation of the goods vehicle under loading conditions similar to those arising in operation via a wheel or a wheel substitute (34) which is mounted on the goods-vehicle axle (33).

22. Test rig according to one of Claims 14 to 21, characterised by at least one longitudinal-force generator (38) for impinging on the axle assembly (16, 30, 32, 33) with longitudinal forces (F_{L}) of the type arising during operation of the goods vehicle under loading conditions similar to those arising in operation.

23. Test rig according to one of Claims 14 to 22, characterised by at least one braking- or driving-force generator (42) for impinging on the axle assembly (16, 30, 32, 33) with braking or driving forces (F_{B}) of the type arising during operation of the goods vehicle under loading conditions similar to those arising in operation via a wheel or a wheel substitute (34) or a lever (35) for inducing a braking force, said wheel, wheel substitute or lever being mounted on the goods-vehicle axle (33).

24. Test rig according to Claims 21, 22 and 23, characterised by, in each case two, longitudinal-force generators (38), side-force generators (40) and braking- or driving-force generators (42), one of which is in each case capable of being coupled to one end of the goods-vehicle axle (33).

25. Test rig according to Claims 21, 22 and 23, characterised by a device, in particular a rigid device, for simultaneous coupling of the wheel or wheel substitute (34) pertaining to each of the two ends of the goods-vehicle axle (33) to a common side-force generator (40) and/or for simultaneous coupling of the lever (35) for inducing a braking force pertaining to each of the two ends of the goods-vehicle axle to a common braking- and driving-force generator (42).

26. Test rig according to one of Claims 14 to 25, characterised by dynamometrical devices (37) in one or several of the force-induction paths of the vertical, longitudinal, side and/or braking- or driving-force generators (38, 40, 42).

27. Test rig according to Claim 26, characterised in that the supporting device (34, 36) is provided with dynamometrical devices (37) for measuring the vertical forces (F_{V}) acting on the goods-vehicle springs (16).

## Revendications

1. Procédé de contrôle d'une structure d'essieu (16,30,32,33) d'un véhicule utilitaire, qui comporte au moins un essieu (33) et des ressorts (16), qui sont fixés aux points de montage (29), qui correspondent à leur fixation sur la carrosserie du véhicule utilitaire, la structure d'essieu (16,30,32,33) étant contrôlée au moyen de forces verticales (F_{V}) du type apparaissant lors du fonctionnement du véhicule utilitaire, comprenant les étapes opératoires suivantes :
(a) soutien de la structure d'essieu (16,30,32,33);
(b) production au moins de premières forces verticales (F_{V}), qui correspondent à une charge statique et/ou à basse fréquence de la structure d'essieu (16,30,32,33); et
(c) application des premières forces verticales (F_{V}) à la structure d'essieu (16,30,32,33);
caractérisé en ce que
(1) les ressorts (16) du véhicule utilitaire sont fixés, par l'intermédiaire de leurs points de montage (29), qui correspondent à leur fixation sur la carrosserie du véhicule utilitaire, à un dispositif de suspension (20) qui est guidé dans la direction de compression élastique (45) des ressorts (16) du véhicule utilitaire et peut tourner autour d'un axe de rotation (24);
(2) les premières forces verticales (F_{V}) sont appliquées, par l'intermédiaire du dispositif de suspension (20) pour les ressorts (16) du véhicule utilitaire, à la structure d'essieu (16,30,32,33), le dispositif de suspension (20) étant déplacé conformément aux compressions élastiques, qui correspondent aux charges statiques et à basse fréquence produites par les premières forces verticales (F_{V}); et
(3) l'essieu (33) du véhicule utilitaire est supporté d'une manière sensiblement fixe dans la direction d'action des premières forces verticales (F_{V}) ou par l'intermédiaire de générateurs de forces verticales servant à produire des secondes forces verticales à une fréquence supérieure qui provoquent des déviations qui sont faibles par rapport aux déviations provoquées par les premières forces verticales (F_{V}).

2. Procédé selon la revendication 1, caractérisé en ce que l'essieu (33) du véhicule utilitaire est maintenu fixe en position dans la direction de compression et de détente élastique indépendamment de décalages qui sont faibles par rapport à la coúrse maximale de compression et de détente élastique des ressorts (16) du véhicule utilitaire et notamment sont inférieurs à 10 % et de préférence a 5 % de la course maximale de compression et de détente élastique des ressorts (16) du véhicule utilitaire.

3. Procédé selon la revendication 1 ou 2, caractérise en ce que le dispositif de suspension (20) est maintenu de manière à être guidé en déplacement de sorte que l'axe de rotation (24) du dispositif de compression élastique (45) des ressorts (16) du véhicule utilitaire est déplaçable parallèlement.

4. Procédé selon la revendication 1, 2 ou 3, caractérisé en ce que l'axe de rotation (24) est maintenu perpendiculaire à la direction de compression élastique (45) des ressorts (16) du véhicule utilitaire et perpendiculaire à la direction axiale de l'essieu (33) du véhicule utilitaire.

5. Procédé selon l'une des revendications 1 à 4, comportant deux ressorts (16) du véhicule utilitaire, caractérisé en ce que l'axe de rotation (24) est guidé de manière à être déplaçable parallèlement le long d'une droite, dont les points sont tous situés à la même distance des deux ressorts (16) du véhicule utilitaire.

6. Procédé selon l'une des revendications 1 à 5, caractérisé en ce que, lorsque le dispositif de suspension (20) est à l'état non chargé ou est à l'état chargé de façon statique, l'axe de rotation (24) est maintenu dans une zone, dont l'étendue comptée à partir du plan des points de montage (29) des ressorts (16) du véhicule utilitaire sur le dispositif de suspension (20) est égale à plus et moins la hauteur des ressorts non chargés (16) du véhicule utilitaire.

7. Procédé selon l'une des revendications 1 à 6, caractérisé en ce qu'on fait agir les premières forces verticales (F_{V}) suivant la ligne d'action (45) ou au voisinage de la ligne d'action (45) des ressorts (16) du véhicule utilitaire ou dans la zone comprise entre les lignes d'action (45) d'au moins deux ressorts (16) du véhicule utilitaire.

8. Procédé selon l'une des revendications 1 à 7 avec deux ressorts (16) du véhicule utilitaire, caractérisé en ce qu'on fait agir les premières forces verticales (F_{V}) sur le dispositif de support (20) de telle sorte qu'elles produisent, en agissant simultanément, une compression élastique symétrique des deux ressorts (16) du véhicule utilitaire et qu'elles produisent, selon une action alternée, une compression élastique de l'un des ressorts (16) du véhicule utilitaire tout en produisant simultanément une détente de l'autre des ressorts (16) du véhicule utilitaire.

9. Procédé selon l'une des revendications 1 à 8, caractérisé en ce que les secondes forces verticales, qui possèdent une fréquence supérieure, sont appliquées par l'intermédiaire d'au moins une roue, d'un jeu de roues (34) ou d'un levier (35) d'application de la force de freinage, qui est monté(e) sur l'essieu (16) du véhicule utilitaire.

10. Procédé selon l'une des revendications 1 à 9, caractérisé en ce qu'on utilise deux premiers générateurs de forces verticales (18,19) servant à produire les premières forces verticales (F_{V}).

11. Procédé selon l'une des revendications 1 à 10, caractérisé en ce qu'au moins deux ressorts (16) du véhicule utilitaire sont maintenus, de préférence d'une manière qui correspond à leur fixation sur une carrosserie de véhicule automobile, notamment de préférence au moyen d'éléments de montage originaux, qui sont montés sur l'essieu (33) du véhicule utilitaire, qui est équipé, des deux côtés, de roues ou d'un jeu de roues (34), éventuellement complété(es) respectivement par un levier (35) d'application d'une force de freinage.

12. Procédé selon l'une des revendications 1 à 11, caractérisé en ce qu'on soumet la structure d'essieu (16,30,32,33), en supplément, à des forces latérales (F_{S}) et/ou à des forces longitudinales (F_{L}) et/ou à des forces de freinage ou d'entraînement (F_{B}) du type apparaissant lors du fonctionnement du véhicule utilitaire, dans des conditions de charge semblables à celles du fonctionnement, les forces latérales (F_{S}) et/ou les forces longitudinales (F_{L}) et/ou les forces de freinage ou d'entraînement (F_{B}) étant appliquées par l'intermédiaire d'au moins une roue montée sur l'essieu ou par l'intermédiaire d'au moins un jeu de roues (34) monté sur l'essieu ou éventuellement par l'intermédiaire d'un levier (35) d'application d'une force de freinage.

13. Procédé selon la revendication 12, caractérisé par le fait que les forces latérales (F_{S}) et les forces de freinage ou d'entraînement (F_{B}) sont appliquées entre les extrémités de l'essieu du véhicule utilitaire, notamment en position médiane entre les extrémités de l'essieu du véhicule utilitaire, par l'intermédiaire respectivement d'un système de transmission de force, de préférence rigide, raccordé ici à la roue ou au jeu de roues (34) ou au levier (35) d'application d'une force de freinage de l'une et de l'autre extrémité de l'essieu du véhicule utilitaire, et que des forces longitudinales (F_{L}) sont appliquées uniquement en un point.

14. Banc d'essai pour le contrôle d'une structure d'essieu (16,30,32,33) d'un véhicule utilitaire, qui comprend au moins un essieu (33) et des ressorts (16), qui sont fixés aux points de montage (29), qui correspondent à leur fixation à la carrosserie du véhicule utilitaire, la structure d'essieu (16,30,32) étant contrôlée au moyen de forces verticales (F_{V}) du type apparaissant lors du fonctionnement du véhicule utilitaire, comprenant :
(a) un châssis (17);
(b) un dispositif de support (34,36) servant à supporter la structure d'essieu (16,30,32,33);
(c) au moins deux générateurs (18,19) de forces verticales servant à produire au moins des forces verticales (F_{V}) qui correspondent à une charge statique et/ou à basse fréquence de la structure d'essieu (16,32,33); et
(d) un dispositif de couplage (1-23) pour accoupler les générateurs (18,19) de forces verticales à la structure d'essieu (16,30,32,33),
caractérisé en ce que
(1) le dispositif de couplage (20-23) comporte un dispositif de suspension (20), qui est guidé dans la direction de compression élastique (45) des ressorts (16) du véhicule utilitaire, peut tourner autour d'un axe en rotation (24) et sert à fixer les ressorts (16) du véhicule utilitaire et à exécuter des déplacements qui correspondent aux compressions élastiques provoquées par les charges statiques et à basse fréquence, en raison des forces verticales (F_{V}); et
(2) le dispositif de support (34,36) supporte l'essieu (33) du véhicule utilitaire sensiblement de façon fixe en position sur la ligne d'action de premiers générateurs (18,19) de forces verticales ou par l'intermédiaire de deux générateurs de forces verticales servant à produire des forces verticales à une fréquence supérieure et dont les déviations sont faibles par rapport aux déviations des premiers générateurs (18,19) de forces verticales.

15. Banc d'essai selon la revendication 14, caractérisé en ce que le dispositif de suspension (20) est guidé par l'intermédiaire d'au moins un guide (27) qui se déplace parallèlement à l'axe horizontal de rotation (24) dans la direction de compression élastique des ressorts (16) du véhicule utilitaire.

16. Banc d'essai selon la revendication 15, caractérisé en ce que l'axe de rotation (24) est guidé des deux côtés par le dispositif de suspension (20) au moyen d'un guide respectif (27).

17. Banc d'essai selon la revendication 14, 15 ou 16, caractérisé en ce que, lorsque le dispositif de suspension (20) est à l'état chargé de façon statique ou non chargé, le palier (20c), monté sur le dispositif de suspension (20), de l'axe de rotation (24) est disposé dans une zone dont l'étendue comptée à partir du plan des points de montage (29) des ressorts (16) du véhicule utilitaire sur le dispositif de suspension (20) est égale à plus et moins la hauteur des ressorts non chargés (16) du véhicule utilitaire.

18. Banc d'essai selon l'une des revendications 14 à 17, caractérisé en ce que le support (20c) de l'axe de rotation (24) sur le dispositif de suspension (20) est réglable dans la direction d'action du premier générateur (18,19) de forces verticales.

19. Banc d'essai selon l'une des revendications 14 à 18, caractérisé en ce que les points d'accouplement (14) des deux premiers générateurs (18,19) de forces verticales sur le dispositif de suspension (20) sont disposés symétriquement par rapport à l'axe de rotation (24).

20. Banc d'essai selon l'une des revendications 14 à 19, caractérisé en ce que les points d'accouplement (44) des deux premiers générateurs (18,19) de forces verticales sont disposés sur ou au voisinage des lignes d'action (45) des ressorts (16) du véhicule utilitaire ou dans la zone située entre ces lignes d'action (45).

21. Banc d'essai selon l'une des revendications 14 à 20, caractérisé par au moins un générateur (40) de forces latérales servant à appliquer à la structure d'essieu (16,30,32,33) des forces latérales (F_{S}) correspondant aux conditions de charge semblables en cas du fonctionnement, par l'intermédiaire d'une roue ou d'un jeu de roues (34), qui est monté(e) sur l'essieu (33) du véhicule utilitaire.

22. Banc d'essai selon l'une des revendications 14 à 21, caractérisé par au moins un générateur (38) de forces longitudinales servant à appliquer à la structure d'essieu (16,30,32,33) des forces longitudinales (F_{L}) du type apparaissant lors du fonctionnement du véhicule utilitaire, dans des conditions de charge semblables à celles qui apparaissent en fonctionnement.

23. Banc d'essai selon l'une des revendications 14 à 22, caractérisé par au moins un générateur (42) de forces de freinage ou d'entraînement servant à appliquer à la structure d'essieu (16,30,32,33) des forces de freinage ou d'entraînement (F_{B}) du type apparaissant lors du fonctionnement du véhicule utilitaire, dans des conditions de charge semblables à celles correspondant au fonctionnement, par l'intermédiaire d'une roue ou d'un jeu de roues (34) ou d'un levier (35) d'application d'une force de freinage, qui est monté(e) sur l'essieu (33) du véhicule utilitaire.

24. Banc d'essai selon les revendications 21, 22 et 23, caractérisé par respectivement deux générateurs (38) de forces longitudinales, deux générateurs (40) de forces latérales et deux générateurs (42) de forces de freinage ou d'entraînement, dont l'un respectivement peut être accouplé à une extrémité de l'essieu (33) du véhicule utilitaire.

25. Banc d'essai selon les revendications 21, 22 et 23, caractérisé par un dispositif notamment rigide pour l'accouplement simultané de la roue ou du jeu de roues (34) de chacune des deux extrémités de l'essieu (33) du véhicule utilitaire sur un générateur commun (40) de forces latérales et/ou pour l'accouplement simultané du levier (35) d'application d'une force de freinage de chacune des deux extrémités de l'essieu du véhicule utilitaire à un générateur commun (42) de forces de freinage et d'entraînement.

26. Banc d'essai selon l'une des revendications 14 à 25, caractérisé par des dispositifss dynamométriques (34) situés dans un ou plusieurs des trajets d'application de forces des générateurs (38,40,42) de forces verticales, de forces longitudinales, de forces latérales et/ou de forces de freinage ou d'entraînement.

27. Banc d'essai selon la revendication 26, caractérisé en ce que le dispositif de support (34,36) est équipé de dispositifs dynamométriques (35) servant à mesurer les forces verticales (F_{V}) qui agissent sur les ressorts (16) du véhicule utilitaire.
